(19) **Europäisches Patentamt / European Patent Office / Office européen des brevets**

(11) **EP 3 316 472 A1**

(12) **EUROPEAN PATENT APPLICATION**
published in accordance with Art. 153(4) EPC

(43) Date of publication:
**02.05.2018 Bulletin 2018/18**

(21) Application number: **16904248.8**

(22) Date of filing: **02.09.2016**

(51) Int Cl.:
**H02M 7/48** (2007.01)

(86) International application number:
**PCT/JP2016/075882**

(87) International publication number:
**WO 2018/042636 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventor: **KASHIMA, Mitsuo**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **INVERTER DEVICE, COMPRESSOR DRIVE DEVICE, AND AIR-CONDITIONER**

(57) There are included an inverter main circuit 3 which converts DC power into three-phase AC power by using a plurality of semiconductor switching elements SW1 to SW6 in which an upper arm switching element and a lower arm switching element disposed between a positive-side DC bus bar P and a negative-side DC bus bar N constituting a DC bus bar are connected in series, a DC current detection circuit 5 which detects a current flowing through the DC bus bar, and an inverter control unit 7 which outputs PWM drive signals for controlling the inverter main circuit 3 based on a DC current detected by the DC current detection circuit 5. A wide band gap semiconductor element is used as each of the semiconductor switching elements SW1 to SW6, and a parasitic diode of the wide band gap semiconductor element is used as a reflux diode. When it is defined that a short-circuit prevention time for preventing short-circuit between the upper arm switching element and the lower arm switching element be td, a semiconductor switching element is set in which a reverse recovery time trr of the parasitic diode has characteristics of $(td/100) \leq trr \leq (td/10)$.

FIG.1

## Description

Field

The present invention relates to an inverter device including an inverter main circuit which converts DC power supplied from a DC bus bar into three-phase AC power by using a plurality of semiconductor switching elements, a compressor drive device, and an air conditioner.

Background

An inverter device disclosed in Patent Literature 1 includes an inverter main circuit which includes a plurality of semiconductor switching elements each of which has a reflux diode connected in reverse-parallel and converts a direct current into an alternating current by changing switching states of the semiconductor switching elements, a shunt resistor which outputs a voltage pulse of a voltage according to phase currents of the output AC in the inverter main circuit, and a detection unit which detects the phase current based on the voltage pulse. In the inverter device disclosed in Patent Literature 1, when it is defined that a pulse width of the voltage pulse to be output from the shunt resistor is P and a recovery time of the reflux diode is R, characteristics of the reflux diode satisfy a relation of $0 < R \leq (1/10)P$. With this configuration, an error voltage included in the output voltage of the inverter main circuit is reduced, and controllability of the inverter main circuit can be improved.

The "recovery time" described above is also referred to as a "reverse recovery time". In the following description, the term "reverse recovery time" is used.

Citation List

Patent Literature

Patent Literature 1: Japanese Patent Application Laid-Open No. 2013-247695

Summary

Technical Problem

As described above, in the conventional inverter device, to reduce the error voltage included in the output voltage of the inverter main circuit, the reverse recovery time R of the reflux diode has been set to be equal to or less than 1/10 of the pulse width P of the voltage pulse output from the shunt resistor. From the viewpoint of inverter control, this means that the pulse width P of the voltage pulse cannot be set to be equal to or less than 10 times of the reverse recovery time R of the reflux diode. That is, in the inverter control according to the related art, there has been a case where the pulse width of the voltage pulse output from the shunt resistor should be limited, and there has been a problem in that the minimum rotational speed, at which a stable operation is available, is restricted due to the error voltage of the motor output voltage caused by the above limitation.

The present invention has been made in view of the above problems. A purpose of the present invention is to obtain an inverter device which can improve controllability of an inverter main circuit by selecting a control method in which an error voltage, which is caused by the limitation, included in an output voltage per control period is zero or can be regarded as zero by including a reflux diode having an appropriate reverse recovery time regardless of a pulse width of a voltage pulse to be output from a shunt resistor.

Solution to Problem

To solve the above problems and to achieve the purpose, an inverter device according to the present invention includes an inverter main circuit which converts DC power into three-phase AC power by using a plurality of semiconductor switching elements in which an upper arm switching element and a lower arm switching element disposed between a positive-side DC bus bar and a negative-side DC bus bar constituting the DC bus bar are connected in series, a DC current detection circuit which detects a current flowing through the DC bus bar, and an inverter control unit which outputs a PWM drive signal for controlling the inverter main circuit based on the DC current detected by the DC current detection circuit. The semiconductor switching element is a wide band gap semiconductor element, and a parasitic diode of the wide band gap semiconductor element is a reflux diode. When it is defined that a short-circuit prevention time for preventing short-circuit between the upper arm switching element and the lower arm switching element is td, a semiconductor switching element is set in which a reverse recovery time trr of the parasitic diode has characteristics of (td/100)≤trr≤(td/10).

Advantageous Effects of Invention

According to the present invention, an effect can be obtained such that controllability of an inverter main circuit can be improved by selecting a control method in which an error voltage included in an output voltage per control period is zero or can be regarded as zero by including a reflux diode having an appropriate reverse recovery time regardless of a pulse width of a voltage pulse to be output from a shunt resistor.

Brief Description of Drawings

FIG. 1 is a block diagram illustrating a configuration of a motor drive system including an inverter device according to a first embodiment.
FIG. 2 is a block diagram illustrating an exemplary hardware configuration for realizing a function of a PWM drive signal generation unit including a PWM drive signal correction unit illustrated in FIG. 1.
FIG. 3 is a timing chart illustrating a relation between PWM drive signals UP to WN before correction to be input to the PWM drive signal correction unit illustrated in FIG. 1 and a DC current.
FIG. 4 is a diagram illustrating a relation between eight basic voltage vectors V0 to V7, the PWM drive signals, and phase current information which is obtained from a DC current Idc.
FIG. 5 is a diagram illustrating operations of U-phase switching elements SW1 and SW4 in a section B-C in FIG. 3.
FIG. 6 is a diagram illustrating operations of the U-phase switching elements SW1 and SW4 immediately after a timing C in FIG. 3.
FIG. 7 is a diagram illustrating operations of V-phase switching elements SW2 and SW5 immediately before a timing D in FIG. 3.
FIG. 8 is a diagram illustrating operations of the V-phase switching elements SW2 and SW5 immediately after the timing D in FIG. 3.
FIG. 9 is a diagram illustrating operations of W-phase switching elements SW3 and SW6 in a section I-J in FIG. 3.
FIG. 10 is a diagram illustrating operations of the W-phase switching elements SW3 and SW6 immediately after a timing J in FIG. 3.
FIG. 11 is a timing chart illustrating a relation between the PWM drive signals UP to WN before correction to be input to the PWM drive signal correction unit in a phase current state different from that in FIG. 3 and a DC current.
FIG. 12 is a timing chart illustrating an example of a case where the phase current information for two phases can be detected from the DC current in a half carrier period in the carrier falling section in a case where the state of the PWM drive signals before the correction is as illustrated in FIG. 3.
FIG. 13 is a timing chart illustrating exemplary PWM drive signals in a case where an error occurs between the PWM drive signals before and after the correction by the PWM drive signal correction unit.
FIG. 14 is a diagram illustrating a relation of a motor iron loss Wmi, an inverter loss Winv, and the sum of the motor iron loss Wmi and the inverter loss Winv relative to a reverse recovery time trr.
FIG. 15 is a diagram illustrating a part of a locus of a vector of the flux linkage of armature winding in a three-phase motor in a case where the three-phase motor is driven by using the PWM drive signal before being corrected.
FIG. 16 is a partially enlarged diagram of the locus of the vector of flux linkage of armature winding for a single carrier period when an output voltage vector in a case where the three-phase motor is driven by the PWM drive signal before the correction is small.
FIG. 17 is a partially enlarged diagram of the locus of the vector of flux linkage of armature winding in a case where the three-phase motor is driven by using the PWM drive signal before correction corresponding to FIG. 16.
FIG. 18 is a diagram illustrating characteristics of the sum of the motor iron loss Wmi and the inverter loss Winv with respect to a carrier frequency in the inverter device according to the present embodiment.
FIG. 19 is a timing chart illustrating an example in a case where a detection timing of the DC current in the state of FIG. 3 is set based on a polarity of each phase current.
FIG. 20 is a timing chart illustrating an example in a case where a detection timing of the DC current in the state of FIG. 11 is set based on a polarity of each phase current.

Description of Embodiments

Hereinafter, an inverter device, a compressor drive device, and an air conditioner according to embodiments of the present invention will be described in detail with reference to the drawings. In the present embodiment, a case where the inverter device is applied to drive a compressor of the air conditioner will be described. The present invention is not limited to the embodiments.

First Embodiment

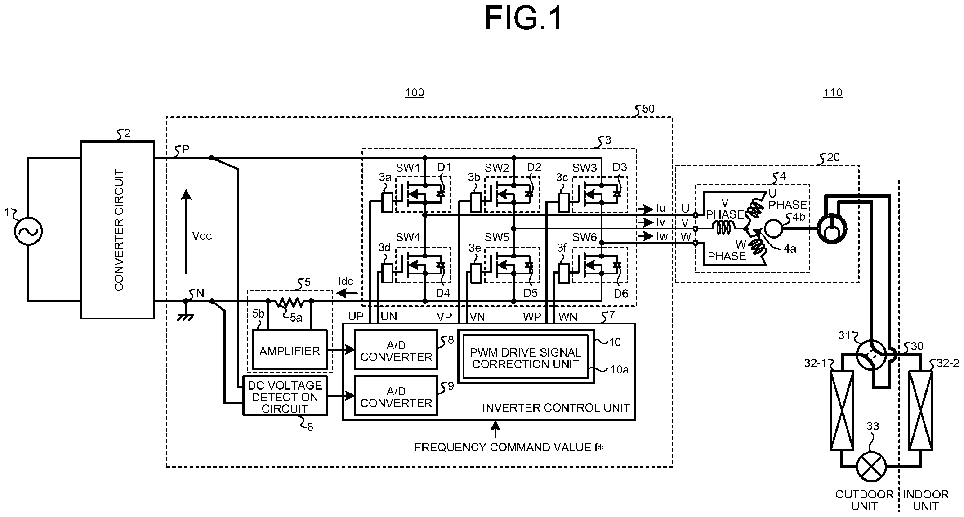

FIG. 1 is a block diagram illustrating a configuration of a motor drive system 100 including an inverter device 50 according to a first embodiment. As illustrated in FIG. 1, the motor drive system 100 according to the first embodiment includes a converter circuit 2 which converts AC power of an AC power supply 1 into DC power, an inverter main circuit 3 which converts the DC power output from the converter circuit 2 into three-phase AC power, and a DC current detection circuit 5 which detects a DC current flowing through a negative-side DC bus bar N of a pair of DC bus bars, i.e., a positive-side DC bus bar P and the negative side DC bus bar N that electrically connect the converter circuit 2 and the inverter main circuit 3.

To detect an output voltage of the converter circuit 2, the motor drive system 100 further includes a DC voltage detection circuit 6 which detects a DC voltage between the positive-side DC bus bar P and the negative-side DC bus bar N and an inverter control unit 7 which outputs a pulse width modulation (PWM) drive signals which are pulse width modulation signals to control the inverter main circuit 3 based on the output of the DC current detection circuit 5, the output of the DC voltage detection circuit 6, and a frequency command value f* given from outside.

The three-phase AC power output from the inverter main circuit 3 is supplied to a compressor 20 provided in an air conditioner 110. The air conditioner 110 includes a four-way valve 31, an outdoor heat exchanger 32-1, an indoor heat exchanger 32-2, and an expansion valve 33 in addition to the compressor 20. In the air conditioner 110, the compressor 20, the four-way valve 31, the outdoor heat exchanger 32-1, the indoor heat exchanger 32-2, and the expansion valve 33 are attached via a refrigerant pipe 30 and form a refrigerant circuit for circulating a refrigerant. When the refrigerant is evaporated or condensed, the air conditioner 110 performs an air conditioning operation while changing the pressure of the refrigerant passing through the pipe by using heat absorption or radiation relative to air to be an object of heat exchange. Wind generated by a rotation of a blast fan which is not illustrated flows through the outdoor heat exchanger 32-1. As a result, in the outdoor heat exchanger 32-1, heat is exchanged between the refrigerant and air.

Similarly, wind generated by a rotation of a blast fan which is not illustrated flows through the indoor heat exchanger 32-2. As a result, in the indoor heat exchanger 32-2, heat is exchanged between the refrigerant and air. Here, in the air conditioner 110, except for the refrigerant pipe 30, only the indoor heat exchanger 32-2 is disposed in an indoor unit of the air conditioner 110, and components other than the indoor heat exchanger 32-2 are disposed in an outdoor unit. The air conditioner 110 illustrated in FIG. 1 exemplifies a separate type in which the indoor unit and the outdoor unit are separated. However, it is not intended that the air conditioner is limited to the separate type.

In the motor drive system configured as described above, the inverter main circuit 3, the DC current detection circuit 5, the DC voltage detection circuit 6, and the inverter control unit 7 constitute the inverter device 50. The inverter device 50 drives a three-phase motor 4 which is a driving source of the compressor 20. The inverter device 50 for driving the compressor 20 constitutes a compressor drive device. For the three-phase motor 4 used for the compressor 20, a permanent magnet motor is suitable.

The converter circuit 2 is configured so that a DC voltage to be output is 250 to 450 V. In general, the converter circuit 2 used to drive the compressor of the air conditioner 110 is composed of a double voltage rectifier circuit in a case where the voltage of the AC power supply 1 is AC 100 V and is composed of a full wave rectifier circuit in a case of AC 200 V. In addition to the above structure, a structure may be used in which a reactor which is not illustrated is disposed on the side of the AC power supply 1 and the reactor is short-circuited to boost the voltage, and a structure may be used in which a reactor which is not illustrated is disposed on a stage after rectification of the AC power supply 1, that is, on the side of the output of the converter circuit 2 and the reactor is short-circuited to boost the voltage. Note that the structures described here are examples out of a number of systems, and any structure may be employed for the structure described here, including the range of the DC voltage to be output. Furthermore, the AC power supply 1 is single-phase AC in FIG. 1. However, the AC power supply 1 may be three-phase AC.

The inverter main circuit 3 includes semiconductor switching elements SW1 to SW6 which are metal-oxide-semiconductor field-effect transistors (MOSFET), and drive circuits 3a to 3f which switching-drive the respective semiconductor switching elements SW1 to SW6.

Here, the semiconductor switching elements SW1 to SW3 connected to the positive-side DC bus bar P are referred to as upper arm switching elements, and the semiconductor switching elements SW4 to SW6 connected to the negative-side DC bus bar N are referred to as lower arm switching elements. When the names of the upper arm switching element and the lower arm switching element are used, the inverter main circuit 3 includes three pairs of semiconductor switching elements, and each pair of the semiconductor switching elements includes the upper arm switching element and the lower arm switching element, which are disposed between the positive-side DC bus bar P and the negative-side DC bus bar N, connected in series.

The semiconductor switching elements SW1 and SW4 connected to a terminal U of the three-phase motor 4, which is described later, are referred to as U-phase switching elements. The semiconductor switching elements SW2 and SW5 connected to a terminal V are referred to as V-phase switching elements. The semiconductor switching elements SW3 and SW6 connected to a terminal W are referred to as W-phase switching elements.

As reflux diodes D1 to D6, parasitic diodes of the MOSFETs are used. Here, a short-circuit prevention time during which the upper arm switching element and the lower arm switching element are not concurrently turned on is referred to as "td". At this time, the semiconductor switching element is set in which a reverse recovery time trr of the parasitic diode has the characteristics of $(td/100) \leq trr \leq (td/10)$.

In the first embodiment, regarding the MOSFETs used as the semiconductor switching elements SW1 to SW6, in consideration of the DC voltage to be output from the converter circuit 2 and a surge voltage caused by wiring impedance, MOSFETs having a withstand voltage of about 600 V are used. Silicon carbide (SiC) is used as a semiconductor material of the MOSFET. SiC has the characteristics such as a high switching speed, a low conduction loss, and a low switching loss, and is suitable for an inverter for driving a compressor of an air conditioner. Note that SiC is an exemplary semiconductor that is referred to as a wide band gap semiconductor because of its characteristics such that a band gap is larger than a band gap of silicon (Si). Other than SiC, semiconductors formed of gallium nitride (GaN) materials or diamonds belong to the wide band gap semiconductors, and the many of their characteristics are similar to the characteristics of SiC. Therefore, the other wide band gap semiconductor using other than SiC may be used.

Returning to the description in FIG. 1, the three-phase motor 4 includes a three-phase Y-connection stator 4a having three-phase windings including U-phase winding, V-phase winding and W-phase winding connected in a Y-shape, and a permanent magnet rotor 4b. The rotation of the three-phase motor 4 connected to the permanent magnet rotor 4b causes to circulate the refrigerant of the air conditioner 110.

In FIG. 1, a connection point between the semiconductor switching elements SW1 and SW4 of the inverter main circuit 3 is connected to the terminal U of the three-phase motor 4, a connection point between the semiconductor switching elements SW2 and SW5 is connected to the terminal V, and a connection point between the semiconductor switching elements SW3 and SW6 is connected to the terminal W. In the present embodiment, a current flowing through the U-phase winding is referred to as a U-phase current and is represented by Iu. Hereinafter, similarly, currents flowing through the V-phase winding and the W-phase winding are respectively referred to as a V-phase current and a W-phase current and respectively represented by Iv and Iw. In the present embodiment, the three-phase Y-connection stator is exemplified as the stator 4a of the three-phase motor 4. However, a three-phase Δ-connection stator may be used. It goes without saying that phase current information that can be detected from the DC current is different between a case of the three-phase Y-connection and a case of the three-phase Δ-connection.

The DC current detection circuit 5 amplifies a voltage equivalent to a voltage drop across a shunt resistor 5a caused by the DC current flowing through the shunt resistor 5a by using an amplifier 5b, and sends the amplified voltage to the inverter control unit 7. The amplifier 5b can be configured by an operational amplifier. Here, in the present embodiment, the DC current flowing through the DC bus bar is detected by amplifying a voltage equivalent to the voltage drop across the shunt resistor 5a. However, a structure using a direct-current current trasformer (DCCT) capable of detecting the DC current may be used.

The DC voltage detection circuit 6 is a detection circuit to detect a DC voltage Vdc which is a voltage on the output side of the converter circuit 2. In FIG. 1, the DC voltage detection circuit 6 divides the DC voltage between the positive-side DC bus bar P and the negative-side DC bus bar N, and supplies the divided voltage to the inverter control unit 7.

Based on the output of the DC current detection circuit 5, the output of the DC voltage detection circuit 6, and the frequency command value f* given from outside, the inverter control unit 7 outputs the PWM drive signals UP, UN, VP, VN, WP, and WN to respectively control the semiconductor switching elements SW1 to SW6 of the inverter main circuit 3 to be turned on/off.

Here, the PWM drive signals UP, VP, and WP are PWM drive signals on the upper arm side of the inverter main circuit 3, and respectively serve as drive signals for the semiconductor switching elements SW1, SW2, and SW3. The PWM drive signals UN, VN and WN are PWM drive signals on the lower arm side of the inverter main circuit 3, and respectively serve as drive signals for the semiconductor switching elements SW4, SW5, and SW6.

The inverter control unit 7 includes A/D converters 8 and 9 and a PWM drive signal generation unit 10. The output of the DC current detection circuit 5 and the output of the DC voltage detection circuit 6 are input to the inverter control unit 7 and are converted into digital values by the respective A/D converters 8 and 9 to be used in the inverter control unit 7. Based on the phase currents Iu, Iv, and Iw flowing through the corresponding phases between the inverter main circuit 3 and the three-phase motor 4, the DC voltage Vdc, and the frequency command value f*, the PWM drive signal generation unit 10 generates the PWM drive signals so that the phase current Iu, Iv, and Iw have sine wave shapes. As one of the methods for generating the PWM drive signals, the method disclosed in Japanese Patent No. 5321530 can be exemplified. In the present embodiment, any method may be basically applied. Furthermore, various other techniques are disclosed regarding the control of this part, and the description here will be omitted.

The PWM drive signal generation unit 10 includes a PWM drive signal correction unit 10a. The PWM drive signal correction unit 10a is a signal correction unit for correcting the PWM drive signals and corrects the PWM drive signals to reproduce the phase currents of two phases from the DC current Idc in one control period.

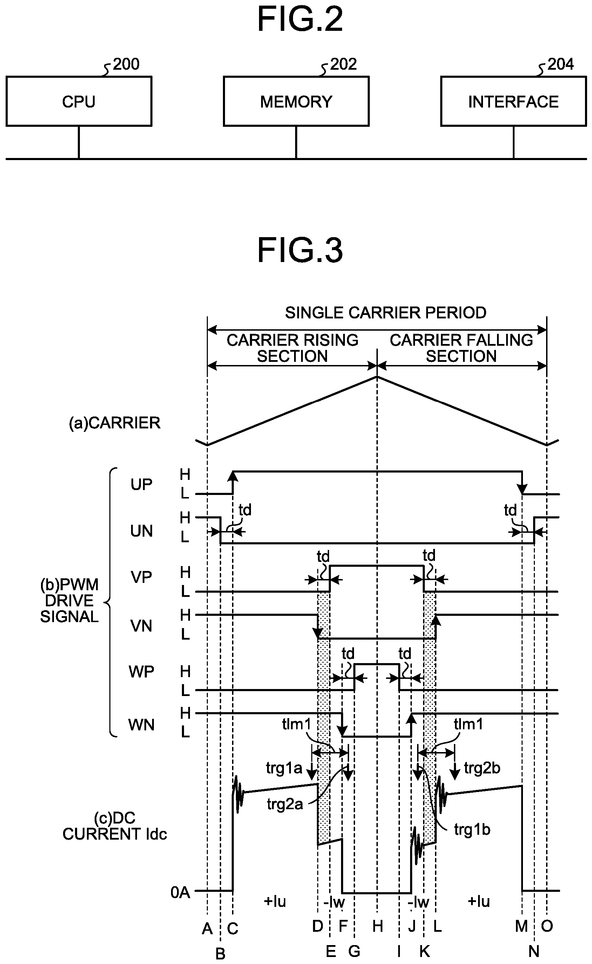

FIG. 2 is a block diagram illustrating an exemplary hardware configuration for realizing a function of the PWM drive signal generation unit 10 including the PWM drive signal correction unit 10a illustrated in FIG. 1. In a case where the function of the PWM drive signal generation unit 10 is realized, as illustrated in FIG. 2, a central processing unit (CPU) 200 for performing operations, a memory 202 for storing a program read by the CPU 200, and an interface 204 for inputting/outputting signals may be included. The CPU 200 may be a device referred to as a computing device, a microprocessor, a microcomputer, a processor, a digital signal processor (DSP), or the like. Examples of the memory 202 include a nonvolatile or volatile semiconductor memory such as a random access memory (RAM), a read only memory (ROM), a flash memory, an erasable programmable ROM (EPROM), and an electrically EPROM (EEPROM).

Specifically, the memory 202 stores a program that executes the function of the PWM drive signal generation unit 10. By exchanging necessary information via the interface 204, the CPU 200 executes various arithmetic processing described in the present embodiment. For example, the inverter control unit 7 can be realized by a microprocessor including an A/D converter.

Next, an operation from the detection of the DC current Idc to the reproduction of the phase currents Iu, IV, and Iw and an operation of the PWM drive signal correction unit 10a will be described with reference to the drawings in FIGS. 3 to 13.

FIG. 3 is a timing chart illustrating a relation between the PWM drive signals UP to WN before correction to be input to the PWM drive signal correction unit 10a illustrated in FIG. 1 and the DC current Idc. In FIG. 3, (a) indicates a carrier of the PWM drive signals, (b) indicates the PWM drive signals UP to WN, and (c) indicates the DC current Idc. Here, the PWM drive signals UP to WN before the correction are controlled so that the waveforms in a section from A to H which is a carrier rising section and the waveforms in a section from H to O which is a carrier falling section symmetrical with respect to a timing H which is a top part of the carrier. In addition, the PWM drive signals UP and UN, VP and VN, and WP and WN have signal levels inverted to each other, other than the sections of the short-circuit prevention time td during which the signal levels concurrently become "L level" . That is, when the level of one of the pair of the PWM drive signals is "H level", the level of the other signal is "L level", and when the level of one of the pair of the PWM drive signals is "L level", the level of the other signal is "H level". To simplify the description below, "H level" is expressed as "H", and "L level" is expressed as "L".

The PWM drive signals cause the switching elements corresponding to "H" are turned on and cause the switching elements corresponding to "L" are turned off. Specifically, when the UP is "H", the corresponding switching element SW1 is turned on, and when the UP is "L", the SW1 is turned off. In actual, a delay time of several tens ns to 1 $\mu$s is caused by a response of each drive circuit corresponding to each PWM drive signal and a response of the switching element. Therefore, it is necessary to consider the delay time of this kind. However, the delay time is omitted here to simplify the description. The delay time of this kind will be omitted below, unless otherwise noted.

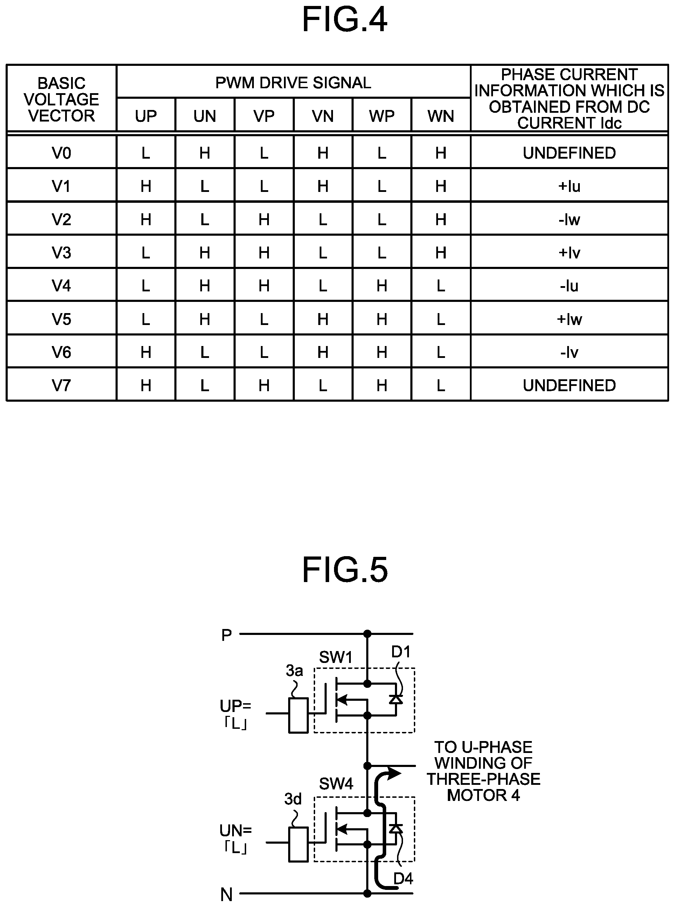

FIG. 4 is a diagram illustrating a relation between eight basic voltage vectors V0 to V7, the PWM drive signals, and pieces of phase current information which are obtained from the DC current Idc. Except for the sections of the short-circuit prevention time td, possible combinations of "H" and "L" of the PWM drive signals are $2\times2\times2=8$. The PWM drive signals in these eight patterns respectively correspond to the eight basic voltage vectors V0 to V7. Here, among the basic voltage vectors, the basic voltage vectors V0 and V7 having no magnitude are referred to as zero vectors. Whereas, the basic voltage vectors V1 to V6 are real vectors having magnitudes.

Next, taking the basic voltage vector V1 as an example, the phase current information which is obtained from the DC current Idc will be described. To simplify the description, the basic voltage vector V1 is simply and appropriately expressed as "V1" below. The same applies to other basic voltage vectors.

When the voltage vector to be output is in the state of V1, the semiconductor switching element SW1 on the upper arm side of the U-phase, the semiconductor switching element SW5 on the lower arm side of the V-phase, and the semiconductor switching element SW6 on the lower arm side of the W-phase are turned on. In FIG. 1, the DC current at this time flows from the positive-side DC bus bar P through the U-phase winding of the three-phase motor 4 via the semiconductor switching element SW1, passes through the V phase and the W-phase windings, and flows through the shunt resistor 5a via the semiconductor switching elements SW5 and SW6, and then, returns to the negative-side DC bus bar N. Therefore, when a direction of the current flowing into the three-phase motor 4 is defined to be positive, the DC current Idc detected when the voltage vector state is V1 is a U-phase current in the positive direction (appropriately expressed as "+Iu" below).

Here, the above content is description of a so-called power running state in which the current flows into the switching element that is turned on. However, in a case of a so-called regenerating state in which the current from the three-phase motor 4 flows into the inverter main circuit 3 or in a case where a reflux current flows into the reflux diodes D1 to D6 of the inverter main circuit 3, the DC current Idc detected when the voltage vector state is V1 is +Iu. In this way, in the section other than the sections of the short-circuit prevention time td, the phase current information which is obtained from the DC current Idc is determined according to the state of the PWM drive signals.

Returning to the description of FIG 3. In FIG. 3, a case where the widths of periods in which the PWM drive signals of the upper arm switching elements maintain to be "H" (referred to as "H width" below) satisfy "UP>VP>WP" and the phase currents satisfy "Iu>0, Iv<0, Iw<0" is illustrated. As described above, because it is defined that the direction of the phase current flowing from the inverter main circuit 3 to the three-phase motor 4 is positive and the reverse direction of the phase current flowing from the three-phase motor 4 to the inverter main circuit 3 is negative, in a case of "Iu>0, Iv<0, Iw<0", the DC current Idc has a waveform corresponding to the U-phase upper arm drive signal UP, the V-phase lower arm drive signal VN, and the W-phase lower arm drive signal WN. In the following description of the operation, the U-phase upper arm drive signal UP is simply expressed as "UP" to simplify the description. The same applies to the other upper arm drive signals and the lower arm drive signals.

In FIG. 3, in the section from A to H indicated as the carrier rising section, the DC current Idc rises from "0 [A]" to the current corresponding to +Iu at a timing C when the UP changes from L to H (the change is expressed as "L → H" below), the DC current Idc falls from +Iu to the current corresponding to -Iw at a timing D when the VN changes from H to L, and the DC current Idc falls from the current corresponding to -Iw to "0 [A]" at a timing F when the WN changes from H to L.

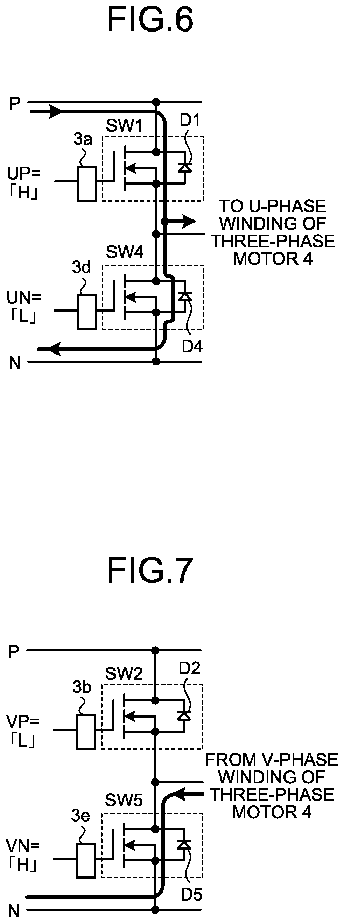

Here, in a section from B to C which is the td section of the UP and the UN, a case is assumed in which the U-phase current Iu flows as a reflux current which passes through the reflux diode D4 to the U-phase winding of the three-phase motor 4 as illustrated in FIG. 5. Therefore, immediately after the timing C when the UP changes from L to H, as illustrated in FIG. 6, the U-phase current Iu flows from the positive-side DC bus bar P to the U-phase winding of the three-phase motor 4 via the U-phase upper arm semiconductor switching element SW1, and a reverse recovery current of the reflux diode D4 flows from the positive-side DC bus bar P, the U-phase upper arm semiconductor switching element SW1 , the reflux diode D4, then to the negative-side DC bus bar N. By being affected by the reverse recovery current, as illustrated in FIG. 3, ringing occurs in the DC current Idc.

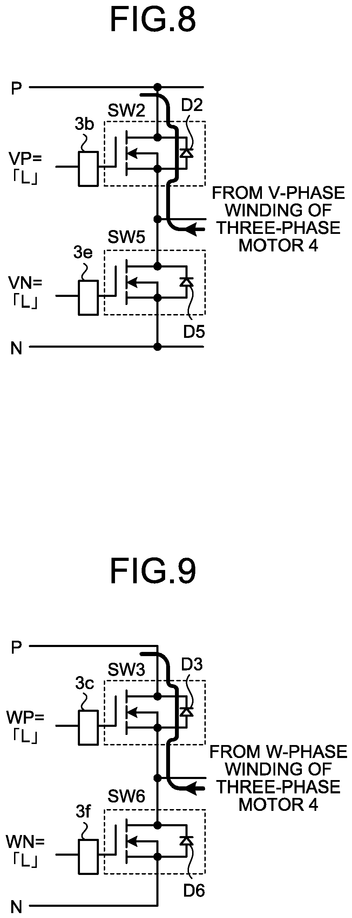

On the other hand, at the timing D when the VN changes from H to L, the state of the V-phase current Iv changes from a state in which the V-phase current Iv flows from the V-phase winding of the three-phase motor 4 to the negative-side DC bus bar N via the V-phase lower arm semiconductor switching element SW5 as illustrated in FIG. 7 to a state in which the V-phase current Iv flows from the V-phase winding of the three-phase motor 4 to the positive-side DC bus bar P via the reflux diode D2 as illustrated in FIG. 8. Therefore, at this timing, the ringing of the DC current Idc caused by the reverse recovery current of the reflux diode does not occur. Furthermore, at a timing F when the WN changes from H to L, similar to the timing D when the VN changes from H to L, the ringing of the DC current Idc caused by the reverse recovery current of the reflux diode does not occur.

In the section from H to O which is the carrier falling section, the DC current Idc rises from "0 [A]" to the current corresponding to -Iw at a timing J when the WN changes from L to H, the DC current Idc rises from -Iw to the current corresponding to +Iu at a timing L when the VN changes from L to H, and the DC current Idc falls from the current corresponding to +Iu to "0 [A]" at a timing M when the UP changes from H to L.

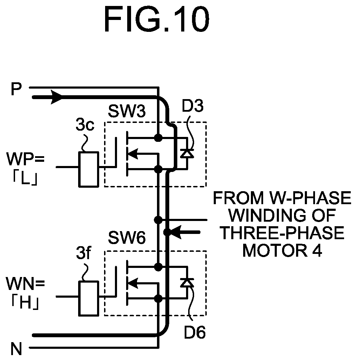

Here, in a section from I to J which is the td section of the WP and the WN, a case is assumed in which the W-phase current Iw flows as a reflux current from the W-phase winding of the three-phase motor 4 through the reflux diode D3 as illustrated in FIG. 9. Therefore, immediately after the timing J when the WN changes from L to H, as illustrated in FIG. 10, the W-phase current Iw flows from the W-phase winding of the three-phase motor 4 to the negative-side DC bus bar N via the W-phase lower arm semiconductor switching element SW6, and the reverse recovery current of the reflux diode D3 flows from the positive-side DC bus bar P, the reflux diode D3, the W-phase lower arm semiconductor switching element SW6, and then to the negative-side DC bus bar N. By being affected by the reverse recovery current, as illustrated in FIG. 3, the ringing occurs in the DC current Idc. Furthermore, similar to the case where the WN changes from L to H, at the timing L when the VN changes from L to H, the ringing caused by the reverse recovery current of the reflux diode D2 occurs in DC current Idc.

On the other hand, at a timing M when the UP changes from H to L, the state of the U-phase current Iu changes from a state in which the U-phase current Iu flows from the positive-side DC bus bar P to the U-phase winding of the three-phase motor 4 through the U-phase upper arm semiconductor switching element SW1 as illustrated in FIG. 6 to a state in which the U-phase current Iu flows to the U-phase winding of the three-phase motor 4 through the reflux diode D4 as illustrated in FIG. 5. Therefore, at this timing, the ringing of the DC current Idc caused by the reverse recovery current of the reflux diode does not occur. In this way, immediately after the timings C, J and L when the DC current Idc rises, the ringing of the DC current Idc caused by the reverse recovery current of the corresponding parasitic diode occurs, and immediately after the timings D, F, and M when the DC current Idc falls, the ringing of the DC current Idc caused by the reverse recovery current of the parasitic diode does not occur.

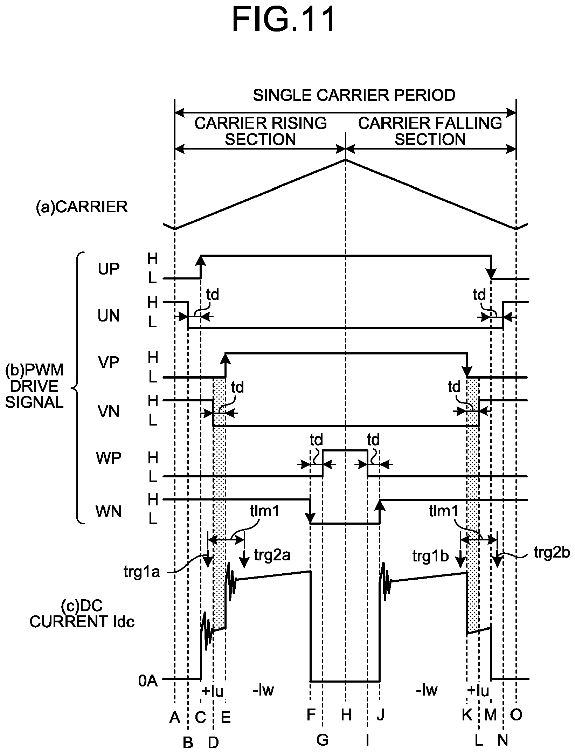

FIG. 11 is a timing chart illustrating a relation between the PWM drive signals UP to WN before correction to be input to the PWM drive signal correction unit 10a and the DC current Idc in a phase current state different from that in FIG. 3. A difference between FIG. 11 and FIG. 3 will be described. In FIG. 3, a case where the H widths of the PWM drive signals of the upper arm switching elements are "UP>VP>WP" and the phase currents are in a state of "Iu>0, Iv<0, Iw<0" has been illustrated. Whereas, in FIG. 11, a case where the H widths of the PWM drive signals of the upper arm switching elements are "UP>VP>WP" and the phase currents are in a state of "Iu>0, Iv>0, Iw<0" is illustrated. Therefore, the DC current Idc has a waveform corresponding to the U-phase upper arm drive signal UP, the V-phase upper arm drive signal VP, and the W-phase lower arm drive signal WN.

In FIG. 11, in the section from A to H which is the carrier rising section, the DC current Idc rises from "0 [A]" to the current corresponding to +Iu at the timing C when the UP changes from L to H, the DC current Idc rises from +Iu to the current corresponding to -Iw at the timing E when the VP changes from L to H, and the DC current Idc falls from the current corresponding to -Iw to "0 [A]" at the timing F when the WN changes from H to L.

Also, in the section from H to O which is the carrier falling section, the DC current Idc rises from "0 [A]" to the current corresponding to -Iw at the timing J when the WN changes from L to H, the DC current Idc falls from -Iw to the current corresponding to +Iu at the timing K when the VP changes from H to L, and the DC current Idc falls from the current corresponding to +Iu to "0 [A]" at the timing M when the UP changes from H to L.

With the above operation, immediately after the timings C, E and J when the DC current Idc rises, the ringing of the DC current Idc caused by the reverse recovery current of the corresponding parasitic diode occurs, and immediately after the timings F, K, and M when the DC current Idc falls, the ringing of the DC current Idc caused by the reverse recovery current of the parasitic diode does not occur.

Here, attention is paid to the sections from D to E and from K to L, which are sections of the short-circuit prevention time td between the VP and the VN in FIGS. 3 and 11.

First, in the state of "Iu>0, Iv<0, Iw<0" in FIG. 3, the phase current information of "-Iw" appears in the DC current Idc in the above sections, and in the state of "Iu>0, Iv>0, Iw<0" in FIG. 11, the phase current information of "+Iu" appears in the DC current Idc. In this way, to obtain the phase current information from the DC current Idc in the sections of the short-circuit prevention time td, it is necessary to consider the polarity of the phase current. In addition, it is necessary to consider the polarity of the phase current as to whether or not the ringing caused by the reverse recovery current of the parasitic diode occurs in the DC current Idc.

Therefore, in the present embodiment, in the td sections for preventing short-circuit between the upper and lower arm switching elements, while it is defined that the phase current information obtained from the DC current Idc is "indefinite" and the ringing caused by the reverse recovery current of the parasitic diode occurs immediately after the change of the DC current Idc, pieces of the phase current information for two phases are detected from the DC current Idc for every control period in which the PWM drive signals are calculated. Here, it is defined that one control period is one carrier period × n/2 (n is positive number equal to or more than two). Then, an interval to obtain one piece of the phase current information for one phase from the DC current Idc is referred to as "interval between the Idc detection target phases", which will be specifically described with reference to FIG. 3. In FIG. 3, in a case where the phase current information of "+Iu" is detected from the DC current Idc in a section from C to D, when the upper arm PWM drive signals are used as references, a section from C to E between a rising edge of the UP and a rising edge of the VP is the interval between the Idc detection target phases. When the lower arm PWM drive signals are used as references, the section from B to D between a falling edge of the UN and a falling edge of the VN is the interval between the Idc detection target phases. In the following description, the interval between the Idc detection target phases will be described while the upper arm PWM drive signals are used as references, unless otherwise noted.

Next, a time required for detecting the interval between the Idc detection target phases in the above case will be described. First, in a case where pieces of the phase current information for two phases are detected from the DC current Idc, it is necessary to detect one piece of the phase current information for each phase in series. In this case, it is necessary to consider a sample hold time of the A/D converter 8 (referred to as "A/D sample hold time" below). Furthermore, it is necessary to avoid the short-circuit prevention time td. In addition, it is necessary to avoid the time when the ringing occurs (referred to as "ringing time" below). Furthermore, it is necessary to consider response times of the drive circuit and the switching element with respect to the PWM drive signals and the delay time of the DC current detection circuit (referred to as "other time" below). Therefore, as the time required for detecting the correlation interval between the Idc detection targets, a time of "short-circuit prevention time td+ringing time trng+A/D sample hold time tsh+other time tetc" (referred to as "first time required for detection" below) is required. The ringing time trng varies depending on wiring impedance, a snubber circuit which is not illustrated, or the like. In the present embodiment, it is assumed that the short-circuit prevention time td=2 $\mu$s, the ringing time trng=2 $\mu$s, and the A/D sample hold time tsh=about 0.5 $\mu$s.

Next, a method of triggering the detection in a case where pieces of the phase current information for two phases are detected from the DC current Idc will be described with reference to FIGS. 3 and 11. First, in a case where the currents for two phases are detected from the DC current Idc in the carrier rising section, the V-phase upper arm drive signal VP the H width in the carrier rising section of which is an intermediate value is selected, and the timing E when the V-phase upper arm drive signal VP changes from L to H is set as a reference timing. In addition, the A/D converter 8 is triggered at a timing trg1a which is a timing before "td+tsh" from the reference timing E, and the A/D converter 8 is triggered at a timing trg2a which is a timing after "tlm1-(td+tsh)" from the reference timing E. In this way, the DC current Idc for two phases is detected.

On the other hand, in a case where pieces of the phase current information for two phases are detected from the DC current Idc in the carrier falling section, the V-phase upper arm drive signal VP the H width in the carrier falling section of which is an intermediate value is selected, and the timing K when the V-phase upper arm drive signal VP changes from H to L is set as a reference timing. In addition, the A/D converter 8 is triggered at a timing trg1b which is a timing before "tsh" from the reference timing K, and the A/D converter 8 is triggered at a timing trg2b after "tlm1-tsh" from the reference timing K. In this way, the DC current Idc for two phases is detected.

When a time of the timing E is te and a time of the timing K is tk, a time corresponding to a difference between the timing trg2a and the timing trgla is expressed by the following formula (1).

$$trg2a-trg1a=[te+\{tlm1-(td+tsh)\}]-\{te-(td+tsh)\}=tlm1......(1)$$

A time corresponding to a difference between the timing trg2b and the timing trg1b is expressed by the following formula (2).

$$trg2b-trg1b=\{tk+(tlm1-tsh)\}-(tk-tsh)=tlm1......(2)$$

That is, an interval between the timing of triggering the detection of the current of the first phase and the timing of triggering the detection of the current of the second phase in the carrier rising section, is equal to that in the carrier falling section.

Note that in the timing charts illustrated in FIGS. 3 and 11, the PWM drive signals before correction that are not corrected by the PWM drive signal correction unit 10a are illustrated. Therefore, even when the trigger is applied at the timing described above, there are cases where the phase current information cannot be obtained from the DC current Idc. More specifically, in FIG. 3, at the timing trgla and the timing trg2b, the phase current information of "+Iu" can be obtained from the DC current Idc. On the other hand, at the timing trg2a, no direct current flows and "0 [A]" is detected. At the timing trglb, because the DC current Idc contains a ringing component, a value in the ringing is detected.

Similarly, in FIG. 11, at the timing trg2a and the timing trglb, the phase current information of "-Iw" can be obtained from the DC current Idc. On the other hand, at the timing trgla, because the DC current Idc contains the ringing component, the value in the ringing is detected, and at the timing trg2b, no DC current flows and "0 [A]" is detected.

Therefore, in the inverter device 50 according to the first embodiment, to detect the DC current Idc for two phases, the PWM drive signal correction unit 10a performs control to correct the PWM drive signals. The PWM drive signal correction unit 10a performs control so that output voltage vectors for one control period before and after the correction become the same by using the remaining control period section in which the DC current Idc is not detected. With this control, it is possible to perform control in which an error voltage included in the output voltage per control period is zero or can be regarded as zero. Hereinafter, an operation in a case where one control period is one carrier period will be described as an example.

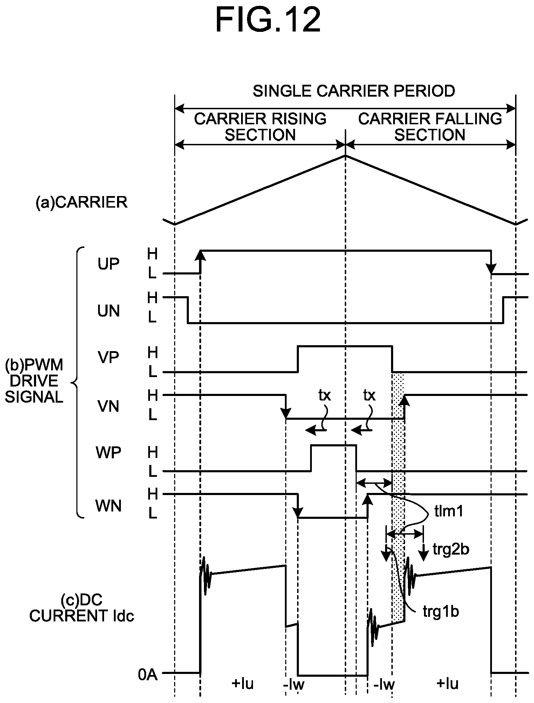

FIG. 12 is a timing chart illustrating an example of a case where pieces of the phase current information for two phases can be detected from the DC current Idc in a half carrier period in the carrier falling section in a case where the state of the PWM drive signals before the correction is as illustrated in FIG. 3. In FIG. 12, with respect to the W-phase upper arm drive signal WP illustrated in FIG. 3, a falling part where the W-phase upper arm drive signal WP changes from H to L in the carrier falling section is shifted to the left side by tx, and a rising part where the W-phase upper arm drive signal WP changes from L to H in the carrier rising section is shifted to the left side. Accordingly, the first time required for detection tlm1 is secured without changing the H width, in other words, while maintaining a time width between the rising edge and the falling edge of the PWM drive signal. In particular, in the example in FIG. 12, the time width tx to be shifted is set so that the interval between the falling part where the W-phase upper arm drive signal WP changes from H to L and the falling part where the V-phase upper arm drive signal VP changes from H to L becomes the first time required for detection tlm1. According to this correction, because the H width is not changed before and after the correction, the output voltage vectors per control period before and after the correction can be the same. It goes without saying that the entire W-phase lower arm drive signal WN is shifted to the left side by tx to correspond to the shifting of the entire W-phase upper arm drive signal WP to the left side by tx. As an example of another method, the method in Japanese Patent No. 5235851 can be used.

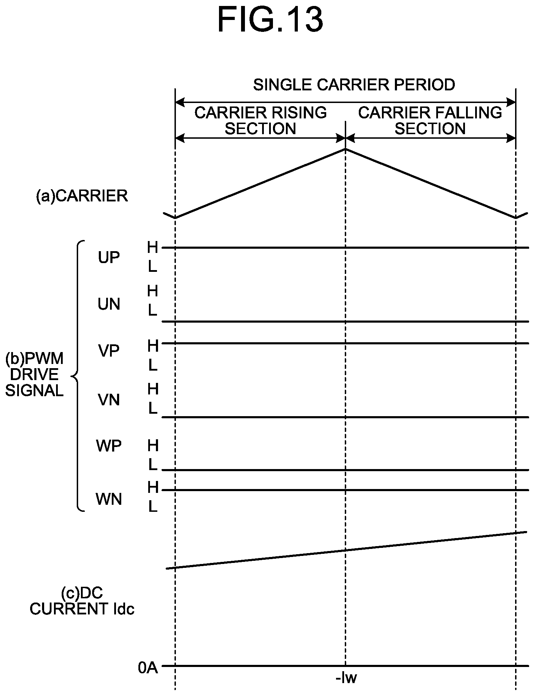

By correcting the PWM drive signals as described above, the phase current information of "-Iw" can be obtained from the DC current Idc at the timing trglb, and the phase current information of "+Iu" can be obtained from the DC current Idc at the timing trg2b. In this case, although the error during one control period can be made zero, when the PWM drive signals are saturated as illustrated in FIG. 13 in a state before the correction by the PWM drive signal correction unit 10a, an error between the output voltage vectors before and after the correction occurs because the first time required for detection tlm1 is secured. However, because the error occurs in a high-rotation region state in which the PWM drive signals are saturated as in the example in FIG. 13 and because the PWM drive signals are saturated, it is possible to regard that the output voltage vectors before and after the correction are almost the same. This means that the error voltage included in the output voltage per control period is zero or can be regarded as zero.

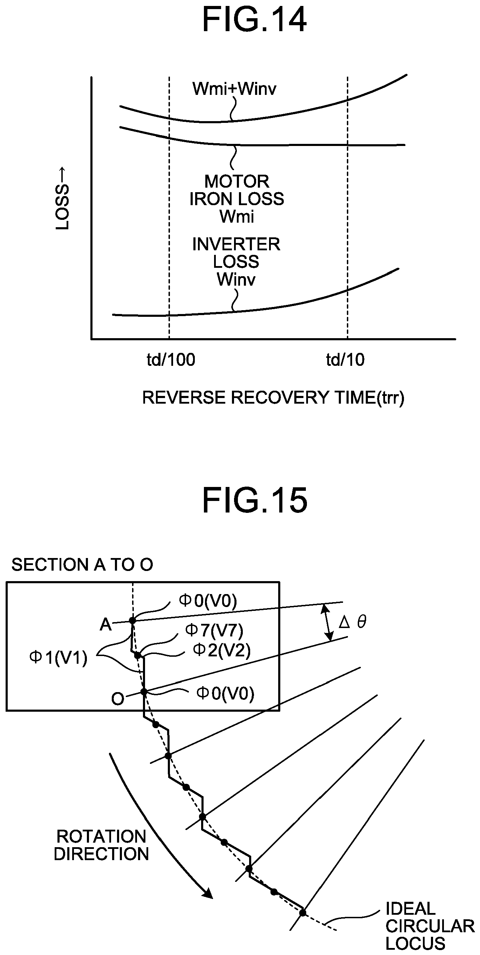

In the present embodiment, each semiconductor switching element of the inverter main circuit 3 is a SiC-MOSFET, the parasitic diode of the SiC-MOSFET is used as the reflux diode, and the switching element is controlled based on the output of the DC voltage detection circuit 6. At the time of the above control, when the short-circuit prevention time td is, for example, a settable minimum value of 2 $\mu$s, a relation of the motor iron loss Wmi of the three-phase motor 4, the inverter loss Winv of the inverter main circuit 3, and the sum of the motor iron loss Wmi and the inverter loss Winv relative to the reverse recovery time trr of the parasitic diode is as illustrated in FIG. 14. In FIG. 14, the horizontal axis indicates the reverse recovery time trr of the parasitic diode. In FIG. 14, the waveform "Wmi+Winv" indicates the sum of the motor iron loss Wmi and the inverter loss Winv.

Here, because a motor copper loss Wmc of the three-phase motor 4 is hardly influenced in the region of the reverse recovery time trr illustrated in FIG. 14, illustration thereof is omitted. Therefore, the minimum point in the waveform of "Wmi+Winv" is a point at which the total loss including the inverter loss and the motor loss is minimized. As illustrated in FIG. 14, the point at which the total loss including the inverter loss and the motor loss is minimized exists in the range of "td/100≤trr≤td/10".

The inverter loss Winv which is affected by the reverse recovery time trr of the parasitic diode is a switching loss generated when the reflux current of the parasitic diode flows as illustrated in FIGS. 6 and 10. Some switching losses of the switching element are caused in the MOSFET, and some are caused in the parasitic diode. Although both switching losses tend to decrease as the value of the reverse recovery time trr decreases, when the reverse recovery time trr is in the region close to "td/100", a loss improvement effect caused by reducing the reverse recovery time trr is reduced. On the other hand, when the reverse recovery time trr is in the region equal to or less than td/10, an influence of a current change (di/dt) at the time of the reverse recovery of the parasitic diode increases, and the ringing which occurs in the DC current Idc increases in time. Therefore, it is necessary to set the first time required for detection tlm1 to be large. As a result, the motor iron loss increases. This will be further described with reference to FIG. 15.

FIG. 15 is a diagram illustrating a part of the locus of the vectors of the flux linkage of armature winding in the three-phase motor 4 in a case where the three-phase motor 4 is driven by using the PWM drive signals before being corrected. In FIG. 15, the vectors flux linkage of armature winding corresponding to the basic voltage vectors V0, V1, V2, and V7 are respectively expressed as Φ0 (V0), Φ1 (V1), Φ2 (V2), and Φ7 (V7). In FIG. 15, Δθ is an electrical angle per carrier period, and a section from A to O surrounded by a square corresponds to the section from A to O in one carrier period in FIG. 3. The locus of the vectors of flux linkage of armature winding corresponding to the PWM drive signals in the section from A to O is illustrated. Here, because Φ0 (V0) and Φ7 (V7) are vectors having no magnitude, Φ0 (V0) and Φ7 (V7) are indicated by dots. In addition, in FIG. 15, the waveform indicated by a broken line indicates an ideal circular locus.

In FIG. 15, as the vector locus indicated by the solid line gets closer to the ideal circular locus indicated by the broken line, generation of wasteful magnetic flux can be reduced, and the motor iron loss can be reduced. The vector of flux linkage of armature winding Φ is a composite vector of flux linkages in the phase windings and is a vector corresponding to any one of the basic voltage vectors V0 to V7. When an armature winding resistance of the three-phase motor 4 is ignored, the generated vector of flux linkage of armature winding delays with respect to the corresponding voltage vector by $\pi/2$ phase.

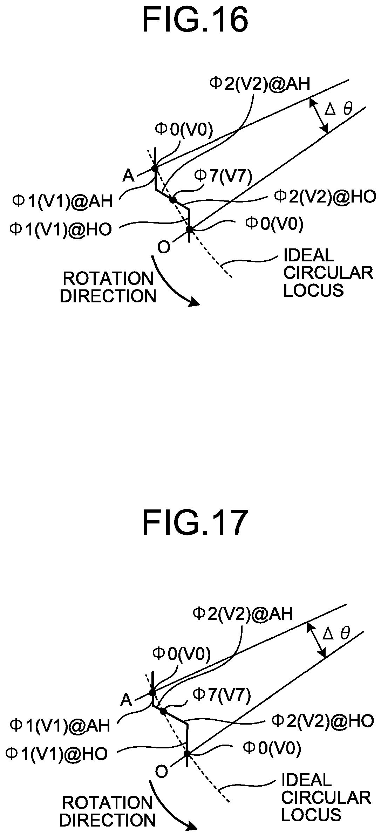

FIG. 16 is a partially enlarged diagram of the locus of the vector of flux linkage of armature winding for a single carrier period when the magnitude of an output voltage vector is small in a case where the three-phase motor is driven by the PWM drive signals before correction. In FIG. 16, the vector of flux linkage of armature winding in one carrier period section (section from A to O) changes in the order of Φ0 (V0), Φ1 (V1) @AH, Φ2 (V2) @AH, Φ7 (V7), Φ2 (V2) @HO, Φ1 (Φ1) @HO, and Φ0 (V0). The order of the vector locus illustrated in FIG. 16 corresponds to the PWM drive signals illustrated in FIGS. 3 and 11. Here, to identify whether the vector is a vector in the first half carrier period section (section AH) or a vector in the second half carrier period section (section HO), "@AH" or "@HO" is added after Φ1 (V1) or Φ2 (V2). Regarding Φ0 (V0) and Φ7 (V7) having no magnitude, the section is not indicated.

A first area surrounded by the segments of "Φ0 (V0), Φ1 (V1) @AH, Φ2 (V2) @AH, and Φ7 (V7)" and the ideal circular locus in the first half carrier period section (section AH) is almost the same as a second area surrounded by the segments of "Φ7 (V7), Φ2 (V2) @HO, Φ1 (Φ1) @HO, and Φ0 (V0)" and the ideal circular locus in the second half carrier period section (section HO). In the example in FIG. 16, a case is illustrated where the magnitude of the output voltage vector is small and the first time required for detection tlm1 cannot be secured in the sections of Φ1 (V1) @AH, Φ1 (V1) @HO, Φ2 (V2) @AH, and Φ2 (V2) @HO.

FIG. 17 is a partially enlarged diagram of the locus of the vector of flux linkage of armature winding corresponding to FIG. 16 in a case where the three-phase motor is driven by using the PWM drive signals before correction. The vector locus illustrated in FIG. 17 corresponds to the PWM drive signals illustrated in FIG. 12, and the first time required for detection tlm1 is secured in the sections of Φ1 (V1) @HO and Φ2 (V2) @HO.

In comparison of FIGS. 16 and 17, it can be found that the positions of the vectors of flux linkage of armature winding at the timings A and O coincide with each other and the average numbers of flux linkage in the control period are the same. Furthermore, in comparison of FIGS. 16 and 17, the vectors of flux linkage of armature winding change in the same order. On the other hand, the second area surrounded by the segments of "Φ7 (V7), Φ2 (V2) @HO, Φ1 (Φ1) @HO, and Φ0 (V0)" and the ideal circular locus in the second half carrier period section (section HO) is larger than the first area surrounded by the segments of "Φ0 (V0), Φ1 (V1) @AH, Φ2 (V2) @AH, and Φ7 (V7)" and the ideal circular locus in the first half carrier period section (section AH) in FIG. 17, and the areas are unbalanced in Fig. 17. Furthermore, the sum of the first area and the second area in FIG. 17 is larger than the sum of the first area and the second area in FIG. 16. In this way, it can be found that, by being corrected by the PWM drive signal correction unit 10a, the locus is deviated from the ideal circular locus than the locus before the correction. Furthermore, this means that the motor iron loss increases when the first time required for detection tlm1 increases.

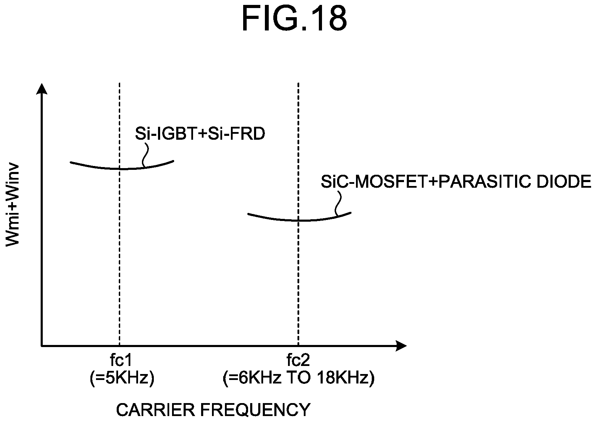

FIG. 18 is a diagram illustrating characteristics of the sum of the motor iron loss Wmi and the inverter loss Winv relative to a carrier frequency in the inverter device 50 according to the first embodiment. In FIG. 18, "SiC-MOSFET+parasitic diode" is the characteristics of the switching element used in the present embodiment, and "Si-IGBT+Si-FRD" is illustrated for comparison. The silicon insulated gate bipolar transistor (Si-IGBT) is a switching element which is mainly used in an inverter main circuit for driving the compressor 20 of the air conditioner 110. Furthermore, the silicon fast recovery diode (Si-FRD) is a reflux diode which is mainly used in the inverter main circuit.

In FIG. 18, in a case of "Si-IGBT+Si-FRD", the minimum point of "motor iron loss Wmi+inverter loss Winv" exists around the carrier frequency fc1=5 kHz. On the other hand, in a case of "SiC-MOSFET+parasitic diode", the minimum point exists at fc2 with a higher carrier frequency. The range of fc2 where the minimum point is applied is 6 kHz to 18 kHz. Here, in comparison of the minimum point of "Si-IGBT+Si-FRD" and the minimum point of "SiC-MOSFET+parasitic diode", the minimum point of "SiC-MOSFET+parasitic diode" is smaller. With the configuration of "SiC-MOSFET+parasitic diode", a conduction loss can be suppressed to be low, and the switching loss due to on/off of the semiconductor switching elements SW1 to SW6 can be suppressed to be low. Furthermore, because the ringing time caused in the DC current Idc is suppressed by setting the reverse recovery time trr of the parasitic diode to satisfy "(td/100)≤trr≤(td/10)", the vector of flux linkage of armature winding can be made closer to the ideal circular locus by increasing the carrier frequency, and an improvement effect caused by the reduction in the motor iron loss can be obtained.

As described above, the inverter device 50 according to the first embodiment includes the inverter main circuit which converts the DC power into three-phase AC power by using the plurality of pairs of semiconductor switching elements in each pair of which the upper arm switching element and the lower arm switching element disposed between the positive-side DC bus bar and the negative-side DC bus bar forming the DC bus bar are connected in series, the DC current detection circuit which detects the current flowing through the DC bus bar, and the inverter control unit which outputs the PWM drive signals for controlling the inverter main circuit based on the DC current detected by the DC current detection circuit. The wide band gap semiconductor element is used as each of the plurality of semiconductor switching elements, and the parasitic diode of each of the plurality of wide band gap semiconductor elements is used as the reflux diode. When the short-circuit prevention time between the upper arm switching element and the lower arm switching element is td, the semiconductor switching element is set to have the reverse recovery time trr of the parasitic diode has the characteristics of (td/100)≤trr≤(td/10). Therefore, the reflux diode having an appropriate reverse recovery time regardless of the pulse width of the voltage pulse output from the shunt resistor is included, and a control method in which the error voltage included in the output voltage per control period is zero or can be regarded as zero can be selected. Accordingly, controllability of the inverter main circuit can be improved. In addition, because there is no restriction on the minimum rotational speed, at which a stable operation is available, due to the error voltage of the motor output voltage, even when the present method is applied to drive the compressor of the air conditioner 110, the number of times of ON/OFF of the compressor is not increased, and comfortability of air conditioning can be maintained. In addition, the inverter device 50 with higher efficiency can be obtained by setting the semiconductor switching element having the characteristics of the reverse recovery time appropriate for the parasitic diode. In particular, in a case where the present invention is applied to drive the compressor of the air conditioner 110, a large energy saving effect can be obtained.

Furthermore, in the configuration of the first embodiment, by increasing the carrier frequency by setting the carrier frequency in the range of 6 kHz to 18 kHz, it is possible to make the vector of flux linkage of armature winding be closer to the ideal circular locus, and an improvement effect caused by reduction in the motor iron loss can be obtained. Therefore, the inverter device 50 with higher efficiency can be obtained.

Furthermore, by fixing the time required for detecting the interval between the Idc detection target phases to the first time required for detection tlm1, the correction processing to the PWM drive signals can be realized with simple processing.

Second Embodiment

In the first embodiment, the time required for detecting the interval between the Idc detection target phases has been fixed to the first time required for detection tlm1. In a second embodiment, a case will be described where the time required for detecting the interval between the Idc detection target phases is changed based on the polarity of each phase current.

As described above, in the sections from D to E and from K to L in which the short-circuit prevention time td between the VP and the VN in FIG. 3 has been set, the phase current information "-Iw" appears in the DC current Idc, and the phase current information "+Iu" appears in the same sections in FIG. 11. In addition, immediately after the timing D in FIG. 3 and immediately after the timing K in FIG. 11, the ringing of the DC current Idc caused by the reverse recovery current of the parasitic diode does not occur. Therefore, it is possible to set the time required for the detection in the sections from D to F and from J to L in FIG. 3 and the sections from C to E and from K to M in FIG. 11 to be less than the first time required for detection tlm1 which has been described in the first embodiment. More specifically, in the first embodiment, the time required for the detection has been set to "td+trng+tsh+tetc". On the other hand, in the control according to the second embodiment, because it is unnecessary to avoid the short-circuit prevention time td in the section from J to L in FIG. 3 and the section from C to E in FIG. 11, "td" can be excluded from time elements for determining the time required for the detection. Therefore, the time required for the detection in these sections can be set to "trng+tsh+tetc". Hereinafter, the above time is referred to as a "second time required for detection", and is expressed as "tlm2".

In the control according to the second embodiment, because it has been known that the ringing does not occur in the DC current Idc in the section from D to F in FIG. 3 and the section from K to M in FIG. 11, "trng" can be excluded from the time elements for determining the time required for the detection. In addition, on the premise of "td>tetc", "tetc" can be excluded from the time elements for determining the time required for the detection. As a result, the time required for the detection in these sections can be set to "td+tsh". Hereinafter, the above time is referred to as "third time required for detection", and is expressed as "tlm3". Note that a relation between the first time required for detection tlm1, the second time required for detection tlm2, and the third time required for detection tlm3 is "tlm1>tlm2>tlm3".

In FIG. 3, the state of "Iu>0, Iv<0, Iw<0" is illustrated, and in FIG. 11, the state of "Iu>0, Iv>0, Iw<0" is illustrated. Here, when only one phase current of the three phase currents is positive, the waveform becomes a DC current waveform as illustrated in FIG. 3, and when only one phase current is negative, the waveform becomes a DC current waveform as illustrated in FIG. 11. That is, it is preferable that the interval between the Idc detection target phases is corrected using the minimum limit value by changing the time required for the detection as described above based on the polarity of each phase current.

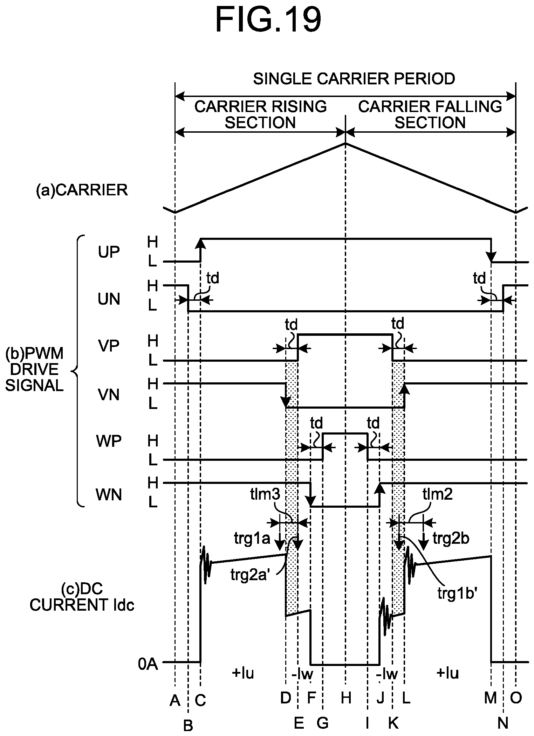

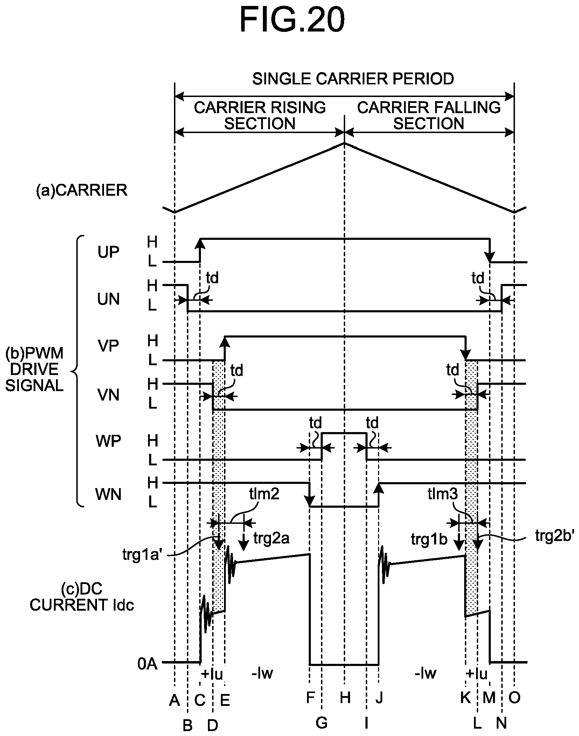

FIG. 19 is a timing chart illustrating an example in a case where a detection timing of the DC current Idc in the state of FIG. 3, that is, a timing to trigger the A/D converter 8, is set based on the polarity of each phase current. FIG. 20 is a timing chart illustrating an example in a case where a detection timing of the DC current Idc in the state of FIG. 11 is set based on the polarity of each phase current. In a case of FIG. 19, the timing of "trg2a" in FIG. 3 is changed to "trg2a'", and the timing of "trg1b" is changed to the timing of "trg1b'. In a case of FIG. 20, the timing of "trg1a" in FIG. 11 is changed to "trg1a', and the timing of "trg2b" is changed to "trg2b'".

Here, when the reference timings in FIGS. 19 and 20 are respectively the rising edge and the falling edge of the upper arm drive signal having the intermediate H width of the pulse similarly to FIGS. 3 and 11, the timing of "trg2a'" in FIG. 19 is a rising edge of the VP which is the reference timing, and the timing of "trg1b'" in FIG. 19 is a timing after "td-tsh" from a falling edge of the VP which is the reference timing. Furthermore, the timing of "trg1a'" in FIG. 20 is a timing before "tsh" from the rising edge of the VP which is the reference timing, and "trg2b'" in FIG. 20 is a timing after "td" from the falling edge of the VP which is the reference timing.

As described above, by changing the time required for the detection based on the polarity of each phase current and setting the detection timing of the DC current Idc suitable for the time required for the detection, even when the PWM drive signals remain before the correction by the PWM drive signal correction unit as illustrated in FIGS. 3 and 11, a ratio at which pieces of the phase current information for two phases can be detected from the DC current in a single control period is increased. With this operation, an increase in the motor iron loss can be suppressed, and higher efficiency can be achieved.

When only one phase current of the three phase currents is positive, a section for detecting the DC current is set in a carrier rising section, and when only one phase current is negative, a section for detecting the DC current is set in a carrier falling section. Accordingly, even when the PWM drive signals remain before the correction by the PWM drive signal correction unit, the ratio at which pieces of the phase current information for two phases can be detected from the DC current in a single control period is increased. With this operation, the increase in the motor iron loss can be more suppressed, and higher efficiency can be achieved.

In the present embodiment, the PWM drive signal generation by using triangular wave carriers is described. However, in a case where similar PWM drive signals can be generated by using other carriers such as a sawtooth wave carrier, it goes without saying that the carrier is not limited to the triangular wave carrier.

It goes without saying that the present invention is not limited to the described embodiments and alternatives and minor improvements can be made and equivalent means can be used without departing from the scope of the present invention.

Reference Signs List

1 AC power supply; 2 converter circuit; 3 inverter main circuit; 4 three-phase motor; 4a stator; 4b permanent magnet rotor; 5 DC current detection circuit; 5a shunt resistor; 5b amplifier; 6 DC voltage detection circuit; 7 inverter control unit; 8, 9 A/D converter; 10 PWM drive signal generation unit; 10a PWM drive signal correction unit; 20 compressor; 30 refrigerant pipe; 31 four-way valve; 32-1 outdoor heat exchanger; 32-2 indoor heat exchanger; 33 expansion valve; 50 inverter device; 100 motor drive system; 110 air conditioner; 200 CPU; 202 memory; 204 interface; P positive-side DC bus bar; N negative-side DC bus bar; SW1 to SW6 semiconductor switching element; D1 to D6 reflux diode.

**Claims**

1. An inverter device for converting DC power supplied from a DC bus bar into AC power to drive a three-phase motor, the inverter device comprising:

   an inverter main circuit to convert the DC power into three-phase AC power by using a plurality of pairs of semiconductor switching elements, in each pair of which an upper arm switching element and a lower arm switching element are connected in series, disposed between a positive-side DC bus bar and a negative-side DC bus bar constituting the DC bus bar;
   a DC current detection circuit to detect a current flowing through the DC bus bar; and
   an inverter control unit to output PWM drive signals for controlling the inverter main circuit based on a DC current detected by the DC current detection circuit, wherein
   each of the plurality of semiconductor switching elements is a wide band gap semiconductor element, and a parasitic diode of each of plurality of the wide band gap semiconductor elements is a reflux diode, and
   when it is defined that a short-circuit prevention time for preventing short-circuit between the upper arm switching element and the lower arm switching element be td, a reverse recovery time trr of the parasitic diode is set to have characteristics of (td/100)≤trr≤(td/10).

2. The inverter device according to claim 1, wherein
   the inverter control unit includes a signal correction unit to correct the PWM drive signals to detect pieces of phase current information for two phases from the DC current in one control period, wherein
   the signal correction unit performs control so that output voltage vectors per control period before and after the correction are equal to each other.

3. The inverter device according to claim 2, wherein
   the signal correction unit performs correction so that a correlation interval between timings at each of which the DC current is detected in a rising edge or a falling edge of the PWM drive signals is secured for a time required for detection and the time required for detection is set to be equal to or longer than a time in which the short-circuit time, a ringing time caused by switching of the semiconductor switching elements, and a sample hold time to detect the DC current are added.

4. The inverter device according to claim 3, wherein
   the inverter control unit fixes the time required for detection in a single control period of a carrier.

5. The inverter device according to claim 2, wherein
   the signal correction unit holds a first time required for detection in which at least a time obtained by adding the short-circuit time, a ringing time caused by switching of the semiconductor switching elements, and a sample hold time to detect the DC current is secured, a second time required for detection in which at least a time obtained by adding the ringing time and the sample hold time is secured, and a third time required for detection in which at least a time obtained by adding the short-circuit time and the sample hold time is secured, and switches the time required for detection of the correlation interval between the timings at each of which the DC current is detected in the rising edge or the falling edge of the PWM drive signals to any one of the first time required for detection, the second time required for detection, and the third time required for detection based on a polarity of each phase current.

6. The inverter device according to claim 5, wherein
the inverter control unit switches a section, in which the DC current for the two phases is detected, between a carrier rising section and a carrier falling section based on the polarity of each phase current for each control period.

7. The inverter device according to any one of claims 2 to 6, wherein
the inverter control unit detects the pieces of the phase current information for two phases in a half carrier period of each control period.

8. The inverter device according to any one of claims 1 to 7, wherein
a carrier frequency of the PWM drive signals is set within a range of 6 kHz to 18 kHz.

9. The inverter device according to any one of claims 1 to 8, wherein
each of the plurality of semiconductor switching elements is a SiC-MOSFET.

10. A compressor drive device, wherein
the inverter device according to any one of claims 1 to 9 is connected to a compressor in which a permanent magnet motor to be driven by three-phase AC power to be output from the inverter main circuit is mounted.

11. An air conditioner comprising:
the compressor drive device according to claim 10.

# FIG.1

100

50

110

20

EP 3 316 472 A1

15

CONVERTER CIRCUIT

SW1  D1    SW2  D2    SW3  D3
3a          3b          3c

SW4        SW5        SW6
3d          3e          3f
D4          D5          D6

UP  UN  VP  VN  WP  WN

Vdc

Idc

5b    5a

AMPLIFIER

DC VOLTAGE
DETECTION
CIRCUIT

A/D
CONVERTER    8

A/D
CONVERTER    9

PWM DRIVE SIGNAL
CORRECTION UNIT    10
                   10a

INVERTER CONTROL UNIT

FREQUENCY COMMAND VALUE f*

Iu  U
Iv  V
Iw  W

V
PHASE    U
         PHASE    4

W
PHASE    4a
         4b

31    30
32-1        32-2

33

OUTDOOR    INDOOR
UNIT        UNIT

# FIG.2

| CPU 200 | MEMORY 202 | INTERFACE 204 |

# FIG.3

SINGLE CARRIER PERIOD

CARRIER RISING SECTION | CARRIER FALLING SECTION

(a)CARRIER

(b)PWM DRIVE SIGNAL

UP, UN, VP, VN, WP, WN

td, tlm1, trg1a, trg2a, trg2b, trg1b

(c)DC CURRENT Idc

0A

+Iu  -Iw  -Iw  +Iu

A C  D F  H J L  M O
B  E G  I K  N

# FIG.4

| BASIC VOLTAGE VECTOR | PWM DRIVE SIGNAL | | | | | | PHASE CURRENT INFORMATION WHICH IS OBTAINED FROM DC CURRENT Idc |
|---|---|---|---|---|---|---|---|
| | UP | UN | VP | VN | WP | WN | |
| V0 | L | H | L | H | L | H | UNDEFINED |
| V1 | H | L | L | H | L | H | +Iu |
| V2 | H | L | H | L | L | H | -Iw |
| V3 | L | H | H | L | L | H | +Iv |
| V4 | L | H | H | L | H | L | -Iu |
| V5 | L | H | L | H | H | L | +Iw |
| V6 | H | L | L | H | H | L | -Iv |
| V7 | H | L | H | L | H | L | UNDEFINED |

# FIG.5

P

SW1    D1

3a

UP=
「L」

TO U-PHASE
WINDING OF
THREE-PHASE
MOTOR 4

SW4

3d

UN=
「L」

D4

N

# FIG.6

P

SW1    D1

3a

UP=
「H」

TO U-PHASE
WINDING OF
THREE-PHASE
MOTOR 4

SW4

3d

UN=
「L」

N

D4

# FIG.7

P

SW2    D2

3b

VP=
「L」

FROM V-PHASE
WINDING OF
THREE-PHASE
MOTOR 4

SW5

3e

VN=
「H」

N    D5

# FIG.8

# FIG.9

# FIG.10

P

SW3    D3

3c

WP=
「L」

FROM W-PHASE
WINDING OF
THREE-PHASE
MOTOR 4

SW6

3f

WN=
「H」

D6

N

# FIG.11

# FIG.12

SINGLE CARRIER PERIOD

| CARRIER RISING SECTION | CARRIER FALLING SECTION |

(a)CARRIER

(b)PWM DRIVE SIGNAL

UP   H / L

UN   H / L

VP   H / L

VN   H / L   tx   tx

WP   H / L

WN   H / L

tlm1

trg2b

trg1b

(c)DC CURRENT Idc

0A   +Iu   -Iw   -Iw   +Iu

# FIG.13

SINGLE CARRIER PERIOD

CARRIER RISING SECTION | CARRIER FALLING SECTION

(a)CARRIER

(b)PWM DRIVE SIGNAL

UP — H / L

UN — H / L

VP — H / L

VN — H / L

WP — H / L

WN — H / L

(c)DC CURRENT Idc

0A

-Iw

# FIG.14

# FIG.15

# FIG.16

# FIG.17

# FIG.18

# FIG.19

# FIG.20

## INTERNATIONAL SEARCH REPORT

| International application No. |
| --- |
| PCT/JP2016/075882 |

| A. CLASSIFICATION OF SUBJECT MATTER |
| --- |
| *H02M7/48(2007.01)i* |

According to International Patent Classification (IPC) or to both national classification and IPC

| B. FIELDS SEARCHED |
| --- |
| Minimum documentation searched (classification system followed by classification symbols)<br>H02M7/48 |

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | JP 2013-247695 A (Daikin Industries, Ltd.),<br>09 December 2013 (09.12.2013),<br>paragraphs [0029] to [0050], [0054]; fig. 1 to 4<br>(Family: none) | 1-4,7-11<br>5-6 |
| Y<br>A | JP 2016-087066 A (Mitsubishi Electric Corp.),<br>23 May 2016 (23.05.2016),<br>paragraphs [0013] to [0018], [0043]; fig. 3 to 6<br>(Family: none) | 1-4,7-11<br>5-6 |
| Y<br>A | JP 2011-234428 A (Mitsubishi Electric Corp.),<br>17 November 2011 (17.11.2011),<br>paragraphs [0015] to [0021], [0044], [0048] to [0056], [0125] to [0126]; fig. 1<br>(Family: none) | 1-4,7-11<br>5-6 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br> 31 October 2016 (31.10.16) | Date of mailing of the international search report<br> 08 November 2016 (08.11.16) |
| --- | --- |
| Name and mailing address of the ISA/<br> Japan Patent Office<br> 3-4-3,Kasumigaseki,Chiyoda-ku,<br> Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/075882

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | SiC Power Device · Module Application Note, Rohm Co., Ltd. [online], 2014.08 [retrieval date 28 October 2016 (28.10.2016)], Internet: <URL: http://rohmfs.rohm.com/jp/products/ databook/applinote/discrete/sic/common/sic_ appli-j.pdf>, page 16 | 1-4,7-11<br>5-6 |
| Y<br>A | SCT2080KE N-channel SiC power MOSFET Data Sheet, ROHM Co., Ltd. [online], 2015.11 [retrieved on 2016.10.28], Retrieved from the Internet: <URL: http://www.rohm.co.jp/web/japan/datasheet/ SCT2080KE>, p. 4 | 1-4,7-11<br>5-6 |
| Y<br>A | JP 2003-189670 A  (Matsushita Electric Industrial Co., Ltd.), 04 July 2003 (04.07.2003), paragraphs [0042] to [0049], [0060] to [0062]; fig. 1 & KR 10-2003-0051223 A  & CN 1426163 A | 2-4,7-8<br>5-6 |
| Y<br>A | JP 2001-327173 A  (Nissan Motor Co., Ltd.), 22 November 2001 (22.11.2001), paragraphs [0005] to [0006], [0026] to [0031]; fig. 1, 4 (Family: none) | 2-4,7-8<br>5-6 |
| Y | JP 2012-197707 A  (Mitsubishi Electric Corp.), 18 October 2012 (18.10.2012), paragraphs [0001], [0074] to [0077]; fig. 22 (Family: none) | 8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013247695 A
- JP 5321530 B
- JP 5235851 B